# EUROPÄISCHE PATENTSCHRIFT

(11) **EP 2 886 379 B1**
(45) Veröffentlichungstag und Bekanntmachung des Hinweises auf die Patenterteilung: **22.01.2020**
(21) Anmeldenummer: 14197418.8
(22) Anmeldetag: 11.12.2014
(51) Int. Cl.: E06B 9/322, B60J 1/20, E06B 9/302, E06B 9/262

(54) **Fahrzeugscheiben-Verblendungssystem**
Blind system for vehicle windows
Système de store pour vitres de véhicule

(30) Priorität: 19.12.2013 DE 102013114445
(43) Veröffentlichungstag der Anmeldung: 24.06.2015
(73) Patentinhaber: REMIS Gesellschaft für Entwicklung und Vertrieb von technischen Elementen mbH Köln, 50829 Köln (DE)
(72) Erfinder: Dreßler, Wolfgang, 50739 Köln (DE); Ratz, Christoph, 53359 Rheinbach (DE)
(74) Vertreter: Patentanwälte ter Smitten Eberlein-Van Hoof Rütten Partnerschaftsgesellschaft mbB

(56) Entgegenhaltungen:
- EP-A1- 2 312 111
- WO-A1-2012/154871
- DE-U1-202013 006 363
- GB-A- 588 301
- US-A- 4 842 034
- US-A1- 2012 200 247
- US-A1- 2013 299 103

## Beschreibung

Die Erfindung betrifft ein Fahrzeugscheiben-Verblendungssystem mit einem Verblendungskörper zum Aufziehen vor eine Fahrzeugscheibe.

Derartige Fahrzeugscheiben-Verblendungssysteme werden insbesondere bei Wohnmobilen, Campingfahrzeugen oder LKW-Fahrerkabinen zum Verblenden bzw. Abschirmen eines Fahrzeuginnenraumes vor Blicken von außen und/oder zur Verdunkelung des Fahrzeuginnenraumes eingesetzt.

In der DE 202 13 630 U1 ist ein Verblendungskörper bzw. eine Jalousie zum bedarfsweisen Aufziehen vor eine Fahrzeugscheibe offenbart. Die Jalousie ist unterhalb der Fahrzeugscheibe an einer Kassette zum Verstauen der Jalousie befestigt und kann von unten nach oben vor die Fahrzeugscheibe ausgezogen werden. Zur Führung und Arretierung der Jalousie sind zwei seitlich neben der Fahrzeugscheibe angeordnete Führungsarme vorgesehen.

In der DE 10 2005 014 059 A1 ist ein Beschattungssystem für eine Fahrerkabine eines Fahrzeuges offenbart, bei der ein verblendungskörper bzw. ein Abdeckmittel von oben nach unten vor sowohl eine Frontscheibe als auch mehrere Seitenscheiben synchron ausziehbar ist. Dadurch können Sicht- und Lichtschlitze zwischen zwei Fenstern vermieden werden.

Ein Nachteil dieser Vorrichtungen ist, dass der Verblendungskörper mit einem Endbereich unterhalb oder oberhalb der Fahrzeugscheibe festgelegt ist, so dass ein Aufziehen des Verblendungskörpers vor die Fahrzeugscheibe lediglich von einer Seite der Fahrzeugscheibe erfolgen kann, beispielsweise von oben nach unten. Dadurch sind jedoch die Einstellmöglichkeiten bzw. die Verblendungsvarianten, insbesondere für eine nur bereichsweise Verblendung der Fahrzeugscheibe, sehr begrenzt.

Um diesem Nachteil zu begegnen, ist in der DE 20 2008 011 462 U1 ein Rollohalterahmen beschrieben, bei dem oberhalb und unterhalb einer Fahrzeugscheibe jeweils ein Rollo bzw. Plissee angeordnet ist. Dadurch kann je ein Rollo von oben nach unten bzw. von unten nach oben vor die Fahrzeugscheibe gezogen werden. Dadurch sind jedoch für jede Fahrzeugscheibe zwei solcher Verblendungssysteme bzw. zwei Verblendungskörper sowie zwei Stauräume für die Verblendungskörper erforderlich, wodurch sowohl der Platzbedarf im Bereich vor der Fahrzeugscheibe als auch die Herstellungs- und Montagekosten erhöht sind.

In der US 4,842,034 A und auch in der US 2013/0299103 A1 ist jeweils ein Beschattungssystem zum Vorziehen vor eine Scheibe beschrieben. Beide Systeme weisen verschiebbar gelagerte Beschattungsflächen auf, wobei die Lagerung mittels einem oder mehrere Seilzüge erfolgt.

Aus DE 20 2013 006 363 U1 ist ein Verblendungssystem bekannt, das einen plisseeartigen Verblendungskörper aufweist, dessen Position über eine obere erste Trägerleiste und eine untere Trägerleiste verstellt werden kann. Die Trägerleisten sind in starren Führungsgliedern verschiebbar gelagert.

Aufgabe der vorliegenden Erfindung ist es daher, ein Fahrzeugscheiben-Verblendungssystem bereitzustellen, das relativ sicher, vielseitig verwendbar, platzsparend aufgebaut und kostengünstig in der Herstellung und Montage ist.

Die Lösung der Aufgabe erfolgt erfindungsgemäß durch ein Fahrzeugscheiben-Verblendungssystem mit den Merkmalen des Anspruchs 1.

Erfindungsgemäß weist das Fahrzeugscheiben-Verblendungssystem einen Verblendungskörper zum Aufziehen vor zumindest einer Fahrzeugscheibe auf, vorzugsweise eine Fahrzeugfrontscheibe, wobei der Verblendungskörper in Längsrichtung faltbar ist und an einem ersten Endbereich eine erste Trägerleiste und an einem dem ersten Endbereich gegenüberliegenden zweiten Endbereich eine zweite Trägerleiste aufweist, und die erste Trägerleiste und die zweite Trägerleiste in einer Führungseinrichtung mit zumindest einem stabförmigen Führungsglied verschiebbar und/oder arretierbar gelagert sind, so dass der Verblendungskörper bei Verschieben der ersten Trägerleiste und/oder der zweite Trägerleiste entfaltbar oder zusammenstaubar ist.

Unter der Längsrichtung ist vorliegend grundsätzlich die Richtung zu verstehen, in die die Trägerleisten verschiebbar gelagert sind. Die Längsrichtung muss daher nicht zwangsläufig eine länger ausgebildete Seite des Verblendungskörpers sein. Unter einer Querrichtung ist grundsätzlich die Richtung senkrecht zu der Längsrichtung zu verstehen.

Das Fahrzeugscheiben-Verblendungssystem ist für eine einzelne Fahrzeugscheibe ausgebildet, es kann sich aber auch über mehrere Fahrzeugscheiben erstrecken, so dass mehrere Fahrzeugscheiben synchron verblendet werden können. Beispielsweise ist eine Verblendung eines oberen Bereichs einer Frontscheibe sowie zwei zu dieser Frontscheibe benachbarter Seitenscheiben möglich. Dadurch ist beispielsweise bei einem niedrigen Sonnenstand ein vollumfänglicher Blendschutz ermöglicht.

Der zwischen der ersten Trägerleiste und der zweiten Trägerleiste angeordnete Verblendungskörper ist erfindungsgemäß faltbar, raffbar, zusammenstaubar bzw. zusammenfaltbar und kann insbesondere als ein Plissee oder ein wabenförmiger Körper ausgebildet sein. Der Verblendungskörper besteht aus einem blick- und lichtundurchlässigen Material und ist somit teilweise oder vollständig blick- und/oder lichtundurchlässig. Insbesondere besteht der Verblendungskörper aus Stoff, Papier oder Folie. Erfindungsgemäß ist der Verblendungskörper über die Trägerleisten derart vor die Fahrzeugscheibe verschiebbar, dass der Verblendungskörper die Fahrzeugscheibe vollständig oder bereichsweise verblenden bzw. verdunkeln kann.

Die erste Trägerleiste und die zweite Trägerleiste bilden jeweils ein Verstärkungselement, das entweder als ein Teil des Verblendungskörpers, beispielsweise ein durch Knicken oder Umschlagen verstärkter Endbereich des Verblendungskörpers, oder als ein separat ausgebildetes Bauteil ausgebildet ist, beispielsweise als eine flache Leiste, das an dem Verblendungskörper, beispielsweise durch Kleben oder Heften, befestigt ist. Die Trägerleisten erstrecken sich jeweils über zumindest die Breite bzw. die Höhe der zu verblendenden Fahrzeugscheibe, vorzugsweise überragen die Trägerleisten die Fahrzeugscheibe jeweils mit einem stirnseitig angeordneten Führungskopf. Zum Entfalten, Zusammenstauen oder Versetzen des Verblendungskörpers sind beide Trägerleisten zeitgleich bzw. synchron verschiebbar. Alternativ kann eine der beiden Trägerleisten feststehen während die andere Trägerleiste verschoben wird. Es ist vorgesehen, dass die erste Trägerleiste und die zweite Trägerleiste jeweils über das bzw. entlang des zumindest einen stabförmigen Führungsglieds verschiebbar gelagert sind.

Das Führungsglied ist fahrzeugseitig festgelegt, vorzugsweise an einer an die Fahrzeugscheibe angrenzenden Fahrzeuginnenwand. Fahrzeugseitig bedeutet vorliegend an einem Fahrzeug, an dem das Fahrzeugscheiben-Verblendungssystem montiert ist, wobei das Fahrzeug selbst nicht zur Erfindung gehört. Das Führungsglied ist im Wesentlichen in Längsrichtung bzw. senkrecht zu der Längserstreckung der Trägerleiste angeordnet und erstreckt sich - je nach Anordnung des Fahrzeugscheiben-Verblendungssystems - über zumindest die Breite bzw. die Höhe der zu verblendenden Fahrzeugscheibe. Vorzugsweise überragt das Führungsglied die Fahrzeugscheibe jeweils mit einem stirnseitigen Endbereich. Das Führungsglied ist grundsätzlich starr ausgebildet, es kann aber auch flexibel sein. Besonders bevorzugt ist das Führungsglied bzw. die gesamte Führungseinrichtung an die fahrzeugseitige Rahmenform angepasst, insbesondere gebogen. In dem Führungsglied ist die Trägerleiste verschiebbar und/oder arretierbar gelagert, so dass das Führungsglied sowohl zur Führung der Trägerleisten als auch zur Kraftübertragung auf die Trägerleisten beim Verschieben und/oder Arretieren dienen kann. Dazu kann die Trägerleiste in dem Führungsglied für eine Kraftübertragung in Eingriff gebracht werden, das heißt die Trägerleiste kann in dem Führungsglied einfassbar, einspannbar oder anlegbar sein. Vorzugsweise weist die Führungseinrichtung zumindest ein Führungsglieder-Paar auf, das aus zwei Führungsgliedern besteht, die besonders bevorzugt seitlich neben der Fahrzeugscheibe, einander gegenüberliegend, im Wesentlichen parallel angeordnet sind. Hierbei kann vorgesehen sein, dass die erste Trägerleiste in einem ersten Führungsglied und die zweite Trägerleiste in einem separaten zweiten Führungsglied verschiebbar und arretierbar gelagert sind. Dadurch sind beide Trägerleisten vollständig unabhängig voneinander in der Führungseinrichtung verschiebbar gelagert. In einer Ausführung der Erfindung weist die Führungseinrichtung ein erstes Führungsglieder-Paar und ein zweites Führungsglieder-Paar auf, wobei die erste Trägerleiste in dem ersten Führungsglieder-Paar und die zweite Trägerleiste in dem zweiten Führungsglieder-Paar verschiebbar und/oder arretierbar gelagert sind.

Je nach Ausrichtung des Fahrzeugscheiben-Verblendungssystems kann eine Verblendung der Fahrzeugscheibe durch ein vertikales oder ein horizontales Verschieben der Trägerleisten bzw. Aufziehen des Verblendungskörpers erfolgen, wobei grundsätzlich jede Ausrichtung des Fahrzeug-Verblendungssystems möglich ist. Beispielweise sind die Trägerleisten jeweils in ihrer Längserstreckung im Wesentlichen vertikal angeordnet, so dass die erste Trägerleiste an einem seitlichen, linken Endbereich des Verblendungskörpers und die zweite Trägerleiste an einem seitlichen, rechten Endbereich des Verblendungskörpers angeordnet ist. Dadurch ist der Verblendungskörper entweder von links nach rechts oder von rechts nach links vor die Fahrzeugscheibe ausziehbar bzw. zusammenstaubar. Folglich ist eine Verblendung der Fahrzeugscheibe in horizontaler Richtung möglich, so dass ein linker, rechter oder mittlerer Bereich der Fahrzeugscheibe von dem Verblendungskörper verblendbar ist.

Dadurch sind mit nur einem Fahrzeugscheiben-Verblendungssystem bzw. einem Verblendungskörper zahlreiche, - je nach Bedarf - individuelle Einstellmöglichkeiten zum vollständigen oder bereichsweisen Verblenden einer Fahrzeugscheibe gegeben. Insbesondere kann das Fahrzeugscheiben-Verblendungssystem als ein Sonnenblendschutz im oberen Bereich der Fahrzeugscheibe oder als ein Blickschutz im unteren bzw. gesamten Bereich der Fahrzeugscheibe genutzt werden, wodurch die Anzahl der Bauteile im Vergleich zum Stand der Technik erheblich reduziert sowie die Herstellungs- und Montagekosten gesenkt werden können. Zudem ist ein Entfalten oder Zusammenstauen des Verblendungskörpers durch ein synchrones Verschieben beider Trägerleisten in entgegengesetzte Richtungen besonders rasch möglich.

Der Verblendungskörper ist vertikal faltbar und die erste Trägerleiste an einem oberen Endbereich des Verblendungskörpers und die zweite Trägerleiste an einem unteren Endbereich des Verblendungskörpers angeordnet. Hierbei sind die Trägerleisten jeweils in ihrer Längserstreckung horizontal angeordnet. Dadurch kann der Verblendungskörper entweder von unten nach oben und/oder von oben nach unten vor die Fahrzeugscheibe entfaltet oder zusammengefaltet werden. Folglich ist eine vollständige oder teilweise Verblendung der Fahrzeugscheibe in vertikaler Richtung möglich, insbesondere kann ein oberer, unterer oder mittlerer Bereich der Fahrzeugscheibe von dem Verblendungskörper verblendet werden.

Es ist eine Antriebsvorrichtung mit zumindest einem Antriebsmotor zum Verschieben und/oder Arretieren der ersten Trägerleiste und/oder der zweiten Trägerleiste vorgesehen. Dadurch ist die Bedienung des Verblendungssystems relativ einfach und komfortabel. Insbesondere ist bei Frontscheiben, die stark geneigt oder besonders weit vorne bzw. "tief" in einem Armaturenbrett angeordnet sind, ein motorisches Verschieben der Trägerleisten im Vergleich zu einem Verschieben per Hand deutlich komfortabler. Grundsätzlich kann für jede Trägerleiste jeweils ein separater Antriebsmotor vorgesehen sein, so dass beide Trägerleisten durch je einen Antriebsmotor verstellbar sind. Alternativ ist lediglich ein Antriebsmotor für beide Trägerleisten vorgesehen, so dass beide Trägerleisten durch lediglich einen Antriebsmotor verstellbar sind. Der Antriebsmotor ist vorzugsweise ein Elektromotor, besonders bevorzugt ein 12-Volt-Gleichstrom-Motor, der über einen Schalter ansteuerbar sein kann. Zur Übertragung der Antriebskraft von dem Antriebsmotor zu der ersten Trägerleiste und/oder der zweiten Trägerleiste kann die Antriebsvorrichtung eine Kraftübertragungseinrichtung, insbesondere eine Welle, ein Getriebe und/oder eine Kupplung aufweisen, so dass die erste Trägerleiste und/oder die zweite Trägerleiste durch die Antriebsvorrichtung motorisch angetrieben verschiebbar sind. Ferner ist vorzugsweise ein Halten oder Arretieren der ersten Trägerleiste und/oder der zweiten Trägerleiste in einer definierten Stellposition durch die Antriebsvorrichtung möglich, beispielsweise durch ein Blockieren einer Bewegung des Antriebsmotors, der Kraftübertragungseinrichtung, der Führungsglieder und/oder der Trägerleisten. Das Blockieren kann beispielsweise durch eine Selbsthemmung des Antriebsmotors erfolgen.

Es ist eine Steuerelektronik zum Ansteuern der Antriebsvorrichtung vorgesehen, über die die erste Trägerleiste und/oder die zweite Trägerleiste in eine definierte Stellposition verschiebbar sind. Die Steuerelektronik kann auf einer Platine angeordnet sein, die für eine oder mehrere Antriebsvorrichtungen ausgelegt ist. Besonders bevorzugt umfasst die Steuerelektronik zumindest einen Schalter zum Ansteuern der ersten Trägerleiste und/oder der zweiten Trägerleiste. Der Schalter kann als ein Drücker-, Flächen- oder Wipp-Schalter ausgebildet sein, mit dem die Antriebsvorrichtung über die Steuerelektronik zum Verschieben der ersten Trägerleiste und/oder der zweiten Trägerleiste angesteuert werden kann. Darüber hinaus können die Steuerelektronik und/oder der Schalter der Steuerelektronik als eine Steuereinheit ausgebildet sein, mit der zumindest eine zuvor definierte Stellposition der ersten Trägerleiste und/oder der zweiten Trägerleiste direkt ansteuerbar sind. Dazu kann die Steuerelektronik programmierbar sein, so dass zumindest eine definierte Stellposition der Trägerleiste vorprogrammiert werden kann und über die Betätigung des Schalters automatisch angesteuert werden kann. Dadurch ist eine sehr rasche und komfortable Bedienung bzw. Verstellung der Trägerleisten ermöglicht.

Es ist zumindest ein Positionssensor zur Erfassung der Position der ersten Trägerleiste und/oder der zweiten Trägerleiste vorgesehen. Der Positionssensor ist mit der Steuerelektronik verschaltet. Dadurch kann die Steuerelektronik eine Rückmeldung über die Position der Trägerleisten erhalten und die Antriebsvorrichtung bedarfsweise ansteuern. Insbesondere kann bei Erfassen der Stellposition der Trägerleiste ein Signal zum Arretieren der Trägerleiste von dem Positionssensor an die Antriebsvorrichtung bzw. an die Steuerelektronik abgeben werden. Der Positionssensor kann beispielweise an einer äußerten oberen Stellposition, einer äußerten unteren Stellposition und/oder an zumindest einer Zwischenposition zwischen der äußerten oberen Stellposition und der gegenüberliegenden, äußerten unteren Stellposition angeordnet sein. Alternativ kann der Positionssensor an der Antriebsvorrichtung oder an der Kraftübertragungseinrichtung angeordnet sein und insbesondere als ein Hall-Sensor ausgebildet sein. Hierbei wird die Position der Trägerleiste über ein Erfassen der Umdrehungszahl des Antriebsmotors bzw. einer Antriebswelle ermittelt. Der Positionssensor kann als ein mechanischer, elektrischer, optischer oder elektromagnetischer Positionssensor ausgebildet sein. In einer Ausführungsform der Erfindung, insbesondere ohne Antriebsvorrichtung und/oder Steuerelektronik, kann der Positionssensor mit der Fahrzeugelektronik verschaltet sein. Dabei kann der Positionssensor zur Erfassung einer Stellposition oder eines Systemmodus, insbesondere des Wohnmodus oder des Fahrtmodus, ein Signal an die Fahrzeugelektronik abgeben. Dadurch kann die Fahrzeugelektronik beispielsweise in Abhängigkeit der Stellposition der Trägerleisten bzw. in Abhängigkeit des Wohn- oder Fahrtmodus ein Starten des Fahrzeugmotors unterdrücken oder erlauben. Insbesondere wird ein Motorstart bei Erfassen eines Wohnmodus unterdrückt, bei Erfassen eines Fahrtmodus erlaubt.

Die Steuerelektronik weist eine Schnittstelle auf, insbesondere eine Steuerschnittstelle, über die die Steuerelektronik des Verblendungssystems von der Fahrzeugelektronik ansteuerbar ist. Dadurch kann die Steuerelektronik des Verblendungssystems bei einem Fahrtantritt, beispielsweise bei Anlassen des Fahrzeugmotors, über ein Signal für eine Verstellung der Trägerleisten aus einem "Wohnmodus" in einen "Fahrtmodus" von der Fahrzeugelektronik aktiv angesteuert werden. Da die Trägerleisten in einem Wohnmodus beliebig angeordnet sein können, dagegen in einem Fahrtmodus zwingend zumindest in einem oberen Drittel der Fahrzeugscheibe angeordnet sein müssen, kann über die Schnittstelle eine Kopplung des Verblendungssystems mit der Fahrzeugelektronik erfolgen. So kann bei einem Fahrtantritt die Steuerelektronik des Verblendungssystems von der Fahrzeugelektronik ein Signal zum Verschieben der Trägerleisten in eine definierte obere Stellposition erhalten. Dadurch wird verhindert, dass die Fahrzeugscheibe bei Bewegung des Fahrzeuges in unzulässiger Weise verdeckt wird. Besonders bevorzugt verhindert die Fahrzeugelektronik ein Starten des Fahrzeugmotors bis die Trägerleisten jeweils die definierte Stellposition erreicht haben.

Vorzugsweise ist eine schaltbare Kupplung vorgesehen, über die die Antriebsvorrichtung mit der ersten Trägerleiste und/oder der zweiten Trägerleiste verschaltbar bzw. kuppelbar ist. Dadurch können die erste Trägerleiste und die zweite Trägerleiste durch vorzugsweise eine einzelne Antriebsvorrichtung synchron oder einzeln bzw. unabhängig voneinander angesteuert bzw. verschoben werden. Alternativ sind zwei angeordnete Antriebsmotoren mit den Trägerleisten jeweils kuppelbar. Die Kupplung kann elektrisch oder mechanisch erfolgen, beispielsweise in bekannter Weise durch ein verstellbares Kupplungsglied, wie ein Zahn oder eine Nocke, der/die mit einem Kettenglied in Eingriff bringbar ist. Besonders bevorzugt erfolgt die Kupplung über die Kraftübertragungseinrichtung und/oder über die Führungseinrichtung.

Die Antriebsvorrichtung kann fahrzeugseitig, vorzugsweise an der Führungseinrichtung angeordnet sein. Besonders bevorzugt ist die Antriebsvorrichtung an einem Stirnseitenbereich der Führungsglieder, oberhalb oder seitlich neben der Fahrzeugscheibe angeordnet und an einer an die Fahrzeugscheibe angrenzenden Fahrzeuginnenwand befestigt. Dadurch können die Antriebsvorrichtung und/oder die Kraftübertragungseinrichtung relativ platzsparend aufgebaut sein.

Vorzugsweise stehen die erste Trägerleiste und die zweite Trägerleiste jeweils in Querrichtung mit zumindest einem Führungskopf gegenüber dem Verblendungskörper hervor. Der Führungskopf ist in Längserstreckung der Trägerleiste an einem Stirnseitenbereich ausgebildet. Vorzugsweise weist die Trägerleiste an beiden stirnseitigen Enden jeweils einen Führungskopf auf, der gegenüber dem Verblendungskörper hervorsteht. Der Führungskopf kann einteilig mit der Trägerleiste ausgebildet sein oder als ein separates Bauteil an der Trägerleiste angeordnet sein. Somit können die Trägerleisten mit zumindest einem den Verblendungskörper überragenden Führungskopf an der Führungseinrichtung, insbesondere dem Führungsglied, verschiebbar und/oder arretierbar gelagert sein. Hierbei ist das Führungslied vorzugsweise an einer an die Fahrzeugscheibe angrenzenden Fahrzeuginnenwand angeordnet, so dass die Trägerleiste in einem Bereich außerhalb des Sichtfeldes bzw. benachbart zu der Fahrzeugscheibe gelagert ist.

Vorzugsweise weisen die erste Trägerleiste und die zweite Trägerleiste jeweils zumindest eine Öffnung auf, durch die sich das Führungsglied erstreckt. Die Öffnung bzw. Ausnehmung ist besonders bevorzugt in dem Führungskopf der Trägerleiste angeordnet, vorzugsweise außerhalb des Sichtbereichs der Fahrzeugscheibe. Die Öffnung ist beispielsweise eine senkrecht zur Längserstreckung der Trägerleiste angeordnete Bohrung oder Nut, durch die sich das Führungsglied, beispielsweise in Form einer Stange, erstreckt. Dadurch kann die Trägerleiste entlang der Längserstreckung des Führungsglieds verschoben werden. Alternativ kann die Öffnung eine stirnseitig an der Trägerleiste angeordnete U-förmige Vertiefung mit einer nach außen gerichteten offenen Seite sein, Die Trägerleiste kann hierbei über die offene Seite der U-förmigen Ausnehmung in das Führungsglied einsetzbar sein, so dass die geschlossenen Seiten der Öffnung das Führungsglied umgeben und die Trägerleiste dadurch führbar ist. Die Trägerleiste ist vorzugsweise freigängig in dem Führungsglied gelagert, wobei ein Arretieren der Trägerleisten an dem Führungsglied beispielsweise über eine Klemmvorrichtung vorgesehen sein kann.

Für eine Kraftübertragung zum Verschieben der Trägerleiste, beispielsweise durch die Antriebsvorrichtung, ist das stabförmige Führungsglied vorzugsweise als eine Spindelwelle ausgebildet, mit der die erste Trägerleiste und/oder die zweite Trägerleiste über ein Gewinde in Eingriff stehen können. Dazu kann insbesondere in der Ausnehmung bzw. Öffnung der Trägerleiste ein Innengewinde angeordnet sein, über das die Trägerleiste mit der Spindelwelle in Eingriff steht. Die Trägerleiste bildet dabei eine Mutter, die auf der drehbar gelagerten und beispielsweise durch die Antriebvorrichtung angetriebenen Spindel verschiebbar ist. Dadurch ist die Trägerleiste mit dem Führungsglied zur Kraftübertragung gekuppelt. Die Trägerleiste kann an beiden Stirnseiten mit jeweils einem Führungsglied in Eingriff stehen. Die Führungsglieder bilden hierbei ein Führungsgliederpaar. Dadurch kann die Trägerleiste an beiden Stirnseitenbereichen bzw. Führungsköpfen synchron verschoben werden. Alternativ kann die Trägerleiste an einem der beiden Führungsköpfen mit dem Führungsglied gekuppelt und an der gegenüberliegenden anderen Stirnseite an dem Führungsglied freigängig (mit-)geführt sein. Besonders bevorzugt ist das Führungsglied eine flexible Spindelwelle, die von der Antriebsvorrichtung direkt angetrieben wird. Alternativ ist das Führungsglied eine Schiene, eine Leiste, eine Stange, oder ein Seil, mit der/dem die Trägerleiste in Eingriff bringbar ist.

Vorzugsweise ist die Führungseinrichtung in einem Rahmen bzw. Profilrahmen angeordnet. Der Profilrahmen ist vorzugsweise an einer an die Fahrzeugscheibe angrenzenden Fahrzeuginnenwand befestigt und umgibt die Fahrzeugscheibe vollständig. Insbesondere kann der Profilrahmen an die fahrzeugseitige Rahmenform angepasst sein. Der Profilrahmen kann das Fahrzeugscheiben-Verblendungssystem teilweise oder vollständig beherbergen bzw. halten, insbesondere die Führungseinrichtung, die Antriebsvorrichtung, die Steuerelektronik und/oder einen Schalter zum Ansteuern der Antriebsvorrichtung. Hierzu kann der Profilrahmen zumindest einen Hohlraum oder eine Aussparung aufweisen. Besonders bevorzugt bildet der Profilrahmen die Führungseinrichtung, beispielsweise in Form einer U-förmigen Leiste, die in Richtung des Verblendungskörpers offen ist, so dass die Trägerleisten in dem U-Profil entlang der Führungseinrichtung verschoben werden können. Vorzugsweise sind nicht nur die Trägerleisten, sondern auch der Verblendungskörper selbst mit einem Randseitenbereich innerhalb des Profilrahmens geführt, so dass in diesem Seitenbereich licht- und/oder blickdurchlässige Schlitze vermieden werden können. Der Profilrahmen kann vorzugsweise im Bereich einer Zwischenposition eine Ausnehmung oder Vertiefung aufweisen, in die beispielsweise eine Raste oder ein Pin zur Arretierung der Trägerleiste in Eingriff bringbar ist.

Vorzugsweise ist zumindest eine Rasteinrichtung zum Arretieren der ersten Trägerleiste und/oder der zweiten Trägerleiste vorgesehen. Besonders bevorzugt ist die Rasteinrichtung an der Führungseinrichtung angeordnet. Die Rasteinrichtung kann eine Verriegelungs- bzw. Stoppstelle der Trägerleiste sein, wobei vorzugsweise eine an der Trägerleiste ausgebildete Raste, ein Pin oder ein Clip in eine an der Führungseinrichtung angeordneten Ausnehmung oder Vertiefung in Eingriff bringbar ist. Die Rasteinrichtung ist insbesondere in dem Endbereich der Führungseinrichtung und/oder an der Zwischenposition angeordnet. Dadurch kann eine mechanische Arretierung der Trägerleiste an der Führungseinrichtung in verschiedenen Stellpositionen in relativ einfacher Weise erfolgen. Insbesondere dient die Rasteinrichtung der Arretierung der Trägerleisten bei nicht motorisch angetriebener Trägerleiste bzw. bei einem Freilauf der Antriebsvorrichtung.

Vorzugsweise ist eine Sicherungseinrichtung zum Sichern der ersten Trägerleiste und/oder der zweiten Trägerleiste gegen eine unerwünschte Verschiebung vorgesehen. Dies ist insbesondere bei der Verwendung des Verblendungskörpers in dem Fahrtmodus, beispielsweise als ein Sonnenblendschutz an einer Frontscheibe, ein sehr wichtiger Aspekt. Hierbei muss gewährleistet werden, dass das Sichtfeld des Fahrers, zum Beispiel während der Fahrt, nicht beeinträchtigt werden kann. Das heißt, es muss sichergestellt werden, dass die Trägerleisten während der Fahrt, beispielsweise aufgrund von Vibrationen, nicht nach unten vor die Frontscheibe gleiten oder verschoben werden können. Die Sicherungseinrichtung kann mechanisch oder elektronisch erfolgen. Beispielsweise kann die Sicherungseinrichtung ein verstellbarer Kontaktschalter in der Steuerelektronik sein, der ein Aufheben eines Blockierens durch die Antriebsvorrichtung verhindert.

Vorzugsweise ist die Sicherungseinrichtung als eine Schnurbremse oder als ein verstellbarer Riegel ausgebildet. Dadurch kann die Trägerleiste mechanisch in einer Stellposition gehalten bzw. gesichert werden. Die Schnurbremse ist dabei vorzugsweise oberhalb der Fahrzeugscheibe angeordnet und umfasst eine Schnur, die mit zumindest der zweiten, insbesondere unteren, Trägerleiste verbunden ist. Bei Herabfallen der Trägerleiste wird die Bewegung der Schnur gebremst bzw. gestoppt, so dass die Trägerleiste an der Schnur "hängen" bleibt. Alternativ ist die Sicherungseinrichtung als ein verstellbarer Riegel ausgebildet. Der Riegel kann dabei In einer Sperrposition an dem Führungsglied hervorstehen, so dass die Trägerleiste bei Auftreffen auf den Riegels an dem Riegel anliegt und die Bewegung der Trägerleiste durch den Riegel gestoppt wird. In einer "Frei-Stellung" kann der Riegel derart angeordnet sein, dass die Bewegung der Trägerleiste nicht beeinflusst wird. Vorzugsweise ist der Riegel translatorisch oder rotatorisch verstellbar. Die Verstellung kann elektromagnetisch erfolgen, wobei der Riegel über die Steuerelektronik ansteuerbar sein kann.

Vorzugsweise ist zumindest eine Kassette vorgesehen, in die der Verblendungskörper und zumindest eine der Trägerleisten in einer Endposition verstaubar sind. Dadurch kann der Verblendungskörper platzsparend und reinlich aufbewahrt werden. Die Kassette ist In einem an die Fahrzeugscheibe angrenzenden Bereich, im Wesentlichen parallel zu der Längserstreckung der Trägerleiste angeordnet und erstreckt sich über zumindest die Länge der Trägerleiste. Je nach Ausrichtung der Trägerleisten ist die Kassette horizontal oder vertikal angeordnet. So kann die Kassette bei horizontaler Anordnung der Trägerleisten oberhalb oder unterhalb der Fahrzeugscheibe und bei vertikaler Anordnung der Trägerleisten in einem linken oder rechten Seitenbereich der Fahrzeugscheibe angeordnet sein. Vorzugsweise ist die Kassette horizontal, unterhalb der Fahrzeugscheibe angeordnet. Selbstverständlich können auch zwei gegenüberliegende Kassetten vorgesehen sein. Die Kassette kann als ein Teil des Profilrahmens ausgebildet sein, beispielsweise in Form einer Aussparung.

In einer Ausführung der Erfindung ist durch Betätigung eines mit der Steuerelektronik verbundenen Schalters das Verblendungssystem zumindest in einen "Fahrt-Modus" oder in einen "Wohn-Modus" schaltbar. Der "Fahrt-Modus" ist insbesondere bei Bewegen des Fahrzeuges vorgesehen, der "Wohn-Modus" bei Stehen des Fahrzeuges. Insbesondere ist zum Starten des Fahrzeugmotors das Verblendungssystem in den "Fahrt-Modus" zu schalten, bei Stand des Fahrzeuges mit ausgeschaltetem Motor kann das Verblendungssystem in den "Wohn-Modus" geschaltet werden. Durch die Anwahl eines Modus werden bestimmte Stellpositionen der Trägerleisten freigegeben bzw. sind die Trägerleisten in bestimmte Stellpositionen einstellbar. Beispielsweise sind in dem "Fahrt-Modus" die Trägerleisten lediglich in einem oberen Bereich der Fahrzeugscheibe verschiebbar, in dem Wohnmodus dagegen in beliebige Stellpositionen. Vorzugsweise kann durch ein einmaliges Betätigen des Schalters ein Verschieben zumindest einer Trägerleiste in eine definierte Stellposition bewirkt werden.

In dem "Fahrt-Modus" können die erste Trägerleiste und die zweite Trägerleiste jeweils an eine obere Endposition verschiebbar sein, so dass der Verblendungskörper oberhalb der Fahrzeugscheibe zusammengefaltet ist. In dieser Stellposition ist die Fahrzeugscheibe von dem Verblendungskörper vollständig freigegeben bzw. nicht verblendet.

Ferner können in dem "Fahrtmodus" für einen Sonnenblendschutz die erste Trägerleiste an die obere Endposition und die zweite Trägerleiste an eine obere Zwischenposition verschoben werden, so dass der Verblendungskörper im oberen Bereich der Fahrzeugscheibe vor etwa 1/3 der Fahrzeugscheibe entfaltet ist. An der oberen Zwischenposition können eine Rasteinrichtung, ein Positionssensor und/oder eine Sicherungseinrichtung angeordnet sein. Dadurch ist die zweite Trägerleiste an der oberen Zwischenposition mechanisch arretierbar, elektronisch überwachbar und/oder gegen ein Herabfallen sicherbar.

In dem "Wohnmodus", der nur bei Stand und ausgeschaltetem Motor des Fahrzeuges einstellbar ist, können die erste Trägerleiste und die zweite Trägerleiste jeweils in eine untere Endposition verschoben werden, so dass der Verblendungskörper unterhalb der Fahrzeugscheibe zusammengefaltet wird. In dieser Stellposition ist die Fahrzeugscheibe von dem Verblendungskörper vollständig freigegeben bzw. nicht verblendet. Vorzugsweise werden der Verblendungskörper und die Trägerleiste vollständig in eine unterhalb der Fahrzeugscheibe angeordnete Kassette eingeschoben.

Für einen Teil-Blickschutz in dem "Wohnmodus" können die erste Trägerleiste in eine untere Zwischenposition und die zweite Trägerleiste in eine untere Endposition verschoben werden, so dass der Verblendungskörper im unteren Bereich der Fahrzeugscheibe vor etwa 1/3 der Fahrzeugscheibe entfaltet wird. Dadurch können in dieser Stellposition insbesondere Einblicke durch die Fahrzeugscheibe von unmittelbar vor dem Fahrzeug stehenden Personen verhindert werden, während ein Lichteinfall im oberen Bereich der Fahrzeugscheibe weiterhin ermöglicht bleibt.

Für einen Voll-Blickschutz in dem "Wohnmodus" können die erste Trägerleiste in die obere Endposition und die zweite Trägerleiste in die untere Endposition verschoben werden, so dass der Verblendungskörper vor die gesamte Fahrzeugscheibe entfaltet ist. Dadurch kann die Fahrzeugscheibe vollständig gegen Einblicke sowie gegen Lichteinfall verblendet werden.

Nachfolgend wird die Erfindung anhand zwei bevorzugter Ausführungsformen unter Bezugnahme auf die anliegenden Zeichnungen näher erläutert.
Figur 1 zeigt eine schematische Darstellung einer bevorzugten Ausführung der Erfindung an einer Fahrzeugfrontscheibe in einer Sonnenblendschutz-Einstellung, und
Figur 2 zeigt eine schematische Darstellung der bevorzugten Ausführung der Erfindung an einer Fahrzeugseitenscheibe in einer Teil-Blickschutz-Einstellung.

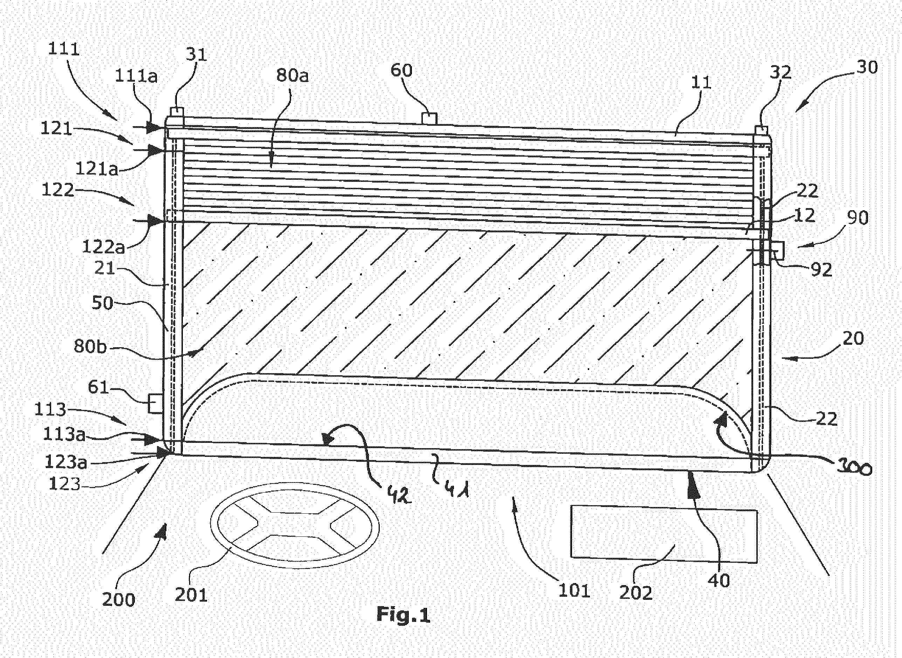

In der Figur 1 ist schematisch ein Fahrzeugscheiben-Verblendungssystem 1 dargestellt, das an einer Fahrzeug-Frontscheibe 80 angeordnet ist. Insbesondere ist das Verblendungssystem an einem schematisch dargestellten Armaturenbrett 200 angeordnet, an dem ein Fahrzeuglenkrad 201 und ein Staufach 202 angeordnet sind. Es sollte klar sein, dass das Verblendungssystem 1 unabhängig von der Anordnung des Fahrzeuglenkrads 201 anwendbar Ist, insbesondere für Links- oder Rechtslenker-rahrzeuge. Das Fahrzeugscheiben-Verblendungssystem 1 umfasst in dem gezeigten Beispiel im Wesentlichen einen Profilrahmen 50, eine Führungseinrichtung 20 mit einem ersten Führungsglied 21 und einem zweiten Führungsglied 22, eine erste Trägerleiste 11 und eine zweite Trägerleiste 12, einen zwischen den Trägerleisten 11, 12 angeordneten Verblendungskörper 10 sowie eine Antriebsvorrichtung 30 mit einem ersten Antriebsmotor 31 und einem zweiten Antriebsmotor 32 zum Verschieben der Trägerleisten 11, 12.

Der Verblendungskörper 10 ist in dem in Figur 1 gezeigten Beispiel in einem oberen Scheibenbereich 80a der Frontscheibe 80 angeordnet und dient in einem "Fahrt-Modus" 101, in dem das nicht näher dargestellte Fahrzeug bewegbar ist, zumindest für den Fahrer als ein Sonnenblendschutz. Zum Auf- und Zuziehen des Verblendungskörpers 10 sind die zwei Trägerleisten 11, 12 vorgesehen.

Die erste Trägerleiste 11 und die zweite Trägerleiste 12 sind in dem gezeigten Beispiel jeweils als eine separate Leiste ausgebildet, die im Wesentlichen vertikal verschiebbar sind. Die Trägerleisten 11, 12 sind jeweils in ihrer Längserstreckung horizontal angeordnet, so dass die erste Trägerleiste 11 an einem oberen Endbereich 10a des Verblendungskörperes 10 und die zweite Trägerleiste 12 an einem unteren Endbereich 10b des Verblendungskörperes 10 angeordnet ist. Dadurch kann der Verblendungskörper 10 entweder von unten nach oben und/oder von oben nach unten vor die Fahrzeugscheibe 80 entfaltet oder zusammengefaltet werden. Folglich kann an der Fahrzeugscheibe 80 ein oberer Sichtbereich 80a und/oder - wie in Figur 1 gezeigt - ein unterer Sichtbereich 80b entstehen. Die Trägerleisten 11, 12 sind jeweils an einem Führungskopf 11a, 11b, 12a, 12b an ihren jeweiligen Stirnseitenbereichen in der Führungseinrichtung 20, insbesondere in den Führungsgliedern 21, 22 gelagert. Dazu weisen die erste Trägerleiste 11, 12 jeweils eine Öffnung 13, 14, 15, 16 auf, über die die Trägerleisten 11, 12 mit den Führungsgliedern 21, 22 in Eingriff stehen.

Die Führungsglieder 21, 22 sind in dem in Figur 1 gezeigten Beispiel jeweils als eine Spindelwelle ausgebildet. Insbesondere ist das erste Führungsglied 21 als eine erste Spindelwelle und das zweite Führungsglied 22 als eine separate zweite Spindelwelle ausgebildet. Das erste Führungsglied 21 bzw. die erste Spindelwelle erstreckt sich durch die Öffnung 13 der ersten Trägerleiste 11 sowie durch die Öffnung 15 der zweiten Trägerleiste 12. Das zweite Führungsglied 22 bzw. die zweite Spindelwelle erstreckt sich durch die Öffnung 14 der ersten Trägerleiste 11 sowie durch die Öffnung 16 der zweiten Trägerleiste 12. Die Führungsglieder 21, 22 sind in dem Profilrahmen 50 gehalten, der fahrzeugseitig festgelegt ist.

Die erste Trägerleiste 11 steht über ein in der Öffnung 13 ausgebildetes Gewinde mit der ersten Spindelwelle 21 für eine Kraftübertragung zum Verschieben in Eingriff. An der Öffnung 14 ist die erste Trägerleiste 11 an der zweiten Spindelwelle 22 ohne Eingriff bzw. frei verschiebbar gelagert. Die zweite Trägerleiste 12 steht über ein in der Öffnung 16 ausgebildetes Gewinde mit der zweiten Spindelwelle 22 für eine Kraftübertragung zum Verschieben in Eingriff. An der Öffnung 15 ist die zweite Trägerleiste 12 an der ersten Spindelwelle 21 ohne Eingriff bzw. frei verschiebbar gelagert. Dadurch kann die erste Trägerleiste 11 durch Rotation der ersten Spindelwelle 21 und die zweite Trägerleiste 12 durch Rotation der zweiten Spindelwelle 22 verschoben werden. Das heißt, die Trägerleisten 11, 12 sind jeweils in Form einer Mutter auf der Spindelwelle 21, 22 verschiebbar gelagert.

Die Führungsglieder 21, 22 sind jeweils mit einem Antriebsmotor 31, 32 der Antriebsvorrichtung 30 verschaltet, insbesondere ist die erste Spindelwelle 21 von einem ersten Antriebsmotor 31 und die zweite Spindelwelle 22 von einem zweiten Antriebsmotor 32 antreibbar bzw. in Rotation versetzbar. Durch die Rotation der Spindelwelle 21, 22 können die erste Trägerleiste 11 und/oder zweite Trägerleiste 12 je nach Rotationsrichtung der Spindelwelle 21, 22 motorisch angetrieben nach oben oder nach unten verschoben werden. Folglich sind die Trägerleiste 11, 12 über die Antriebvorrichtung 30 motorisch angetrieben verschiebbar. Zur Ansteuerung der jeweiligen Spindelwelle 21, 22 bzw. des jeweiligen Antriebsmotors 31, 32 sind die Antriebsmotoren 31, 32 mit einer Steuerelektronik 60 verschaltet und über einen Schalter 61 ansteuerbar. Die Antriebsmotoren 31, 32 sind in dem Profilrahmen 50 integriert bzw. beherbergt.

Die Trägerleisten 11, 12 sind in verschiedenen "Funktions-Modi" 101, 102 jeweils zwischen verschiedenen definierten Stellpositionen 111, 112, 113, 121, 122, 123 stufenlos verschiebbar. Zur Steuerung und Regelung der Antriebsvorrichtung 30 ist an den Stellpositionen 111, 112, 113, 121, 122, 123 jeweils ein Positionssensor 111a, 112a, 113a, 121a, 122a, 123a zur Erfassung der Trägerleisten 11, 12 angeordnet. Die Positionssensoren 111a, 112a, 113a, 121a, 122a, 123a sind dazu mit der Steuerelektronik 60 verschaltet und geben ein Signal an die Steuerelektronik 60, sobald eine der Trägerleiste 11, 12 die Stellposition 111, 112, 113, 121, 122, 123 erreicht oder passiert. Die Arretierung der Trägerleiste 11, 12 kann durch eine Selbsthemmung des Antriebsmotors 31, 32 erfolgen. Alternativ zu der motorischen Arretierung der Trägerleisten 11, 12 kann an den definierten Stellpositionen 111, 112, 113, 121, 122, 123 für eine mechanische Arretierung der Trägerleisten 11, 12 jeweils eine in Figur 1 nicht dargestellte Rasteinrichtung 95 angeordnet sein.

In der Figur 1 sind die Trägerleisten 11, 12 in den Stellpositionen 111, 122 gezeigt, die in einem "Fahrtmodus" 101 als Sonnenblendschutz einstellbar sind. Dazu ist die erste Trägerleiste 11 an einer oberen Endposition 111 und die zweite Trägerleiste 12 an einer oberen Zwischenposition 122 angeordnet. Der Verblendungskörper 10 ist im oberen Bereich der Fahrzeugscheibe 80a vor etwa 1/3 der Fahrzeugscheibe 80 entfaltet. Somit ist die Fahrzeugfrontscheibe 80 in einen verblendeten, oberen Bereich 80a und in einen frei einsehbaren, unteren Bereich 80b geteilt, Die Zwischenposition 122 bildet dabei die in dem Fahrtmodus 101 maximal zulässige Tiefe bzw. Stellposition der zweiten Trägerleiste 12, da bei einem weiteren Verschieben der zweiten Trägerleiste 12 nach unten der Sichtbereich des Fahrers eingeschränkt wird.

In dem Fahrtmodus 101 ist eine Sicherung der Trägerleisten 11, 12 gegen ein unerwünschtes Verschieben erforderlich. Dazu ist eine Sicherungseinrichtung 90 vorgesehen, die ein Verschieben der Trägerleisten 11, 12 von oben nach unten über die Zwischenposition 122 hinaus verhindert. Die Sicherungseinrichtung 90 ist in dem in Figur 1 gezeigten Beispiel als ein verschiebbarer Riegel 92 ausgebildet, der auf Höhe der Zwischenposition 122 angeordnet ist. Der Riegel 92 begrenzt die Bewegungsfreiheit der Trägerleisten 11, 12 und verhindert mechanisch ein weiteres Verschieben der Trägerleisten 11, 12 nach unten über die Zwischenposition 122 hinaus.

Für ein Aufheben des Sonnenblendschutzes bzw. Einfahren des Verblendungskörpers 10, kann die zweite Trägerleiste 12 nach oben bis zu der Stellposition 121 verschoben werden. Dadurch befinden sich die erste Trägerleiste 11 in der oberen Endposition 111 und die zweite Trägerleiste 12 in der oberen Endposition 121, so dass der Verblendungskörper 10 vollständig zusammengefaltet ist. Diese Positionen der Trägerleisten 11, 12 werden in dem Fahrtmodus 101 eingestellt, wenn kein Sonnenblendschutz gewünscht ist.

Darüber hinaus ist es möglich, dass das Verblendungssystem 1, insbesondere der Verblendungskörper 10, wie in Figur 1 mit der unterbrochenen Linie (300) gezeigt, der Wölbung der Fahrzeugscheibe 80 folgt bzw. parallel zu der Form der Fahrzeugscheibe 80 ausgebildet ist. Ferner kann das Verblendungssystem 1 bei einer stark geneigten Fahrzeugscheibe 80 schräg bzw. parallel zu der Fahrzeugscheibe 80 angeordnet sein. Dadurch kann der Platzbedarf für das Verblendungssystem 1 minimiert werden.

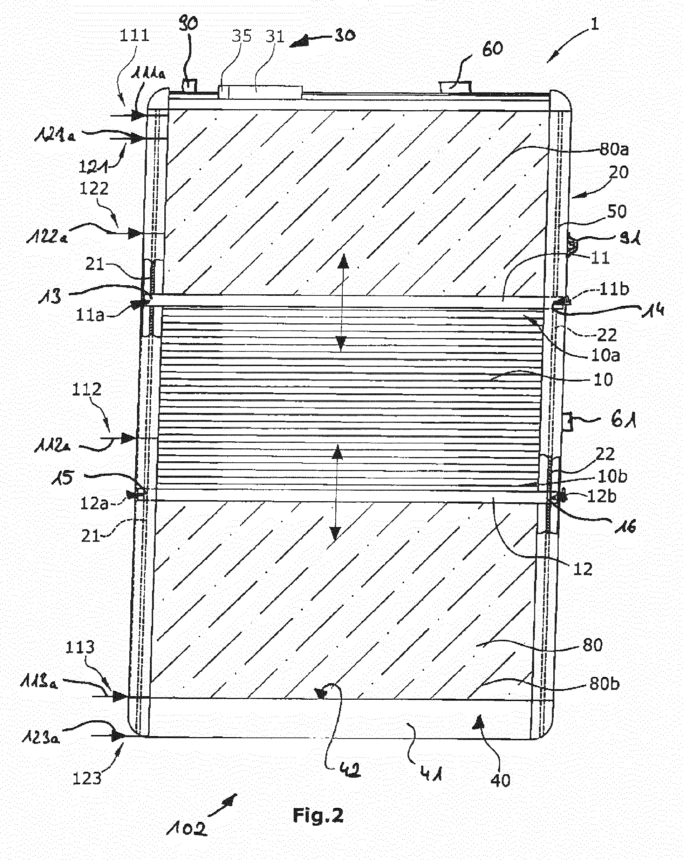

In der Figur 2 ist schematisch ein Fahrzeugscheiben-Verblendungssystem 1 dargestellt, das an einer Fahrzeug-Seitenscheibe 80 angeordnet ist.

In der Figur 2 sind die Trägerleisten 11, 12 in Stellpositionen eines "Wohnmodus" 102 gezeigt. Insbesondere sind die Trägerleisten 11, 12 jeweils in eine frei angesteuerte Stellposition verschoben. Dadurch sind die Trägerleisten 11, 12 derart angeordnet, dass der Verblendungskörper 10 über einen mittleren Bereich der Fahrzeugscheibe 80 entfaltet ist. Die Stellpositionen 112, 113, 123 unterhalb der Zwischenposition 122 sind nur in dem "Wohnmodus" 102 einstellbar, um einen teilweisen Blickschutz, beispielsweise auf einem Camping-Platz, zu erreichen. Dabei ist in dem in Figur 1 gezeigten Beispiel der mittlere Bereich der Fahrzeugscheibe 80 verdeckt, und der obere Scheibenbereich 80a und der untere Scheibenbereich 80b frei einsehbar. Der Wohnmodus 102 ist nur im Stand des Fahrzeuges mit ausgeschaltetem Motor einstellbar.

Um den Blickschutz zu erweitern, kann die erste Trägerleiste 11 nach oben und/oder die zweite Trägerleiste 12 nach unten motorisch angetrieben oder per Hand verschoben werden. Um den Blickschutz zu verkleinern, kann die erste Trägerleiste 11 nach unten und/oder die zweite Trägerleiste 12 nach oben verschoben werden. Die Verschiebung der Trägerleisten 11, 12 erfolgt in der in Figur 2 gezeigten Ausführungsform über lediglich einen einzelnen Antriebsmotor 31 mit einer Kupplungseinrichtung 35. Über die Kupplungseinrichtung 35 kann der Antriebsmotor 31 entweder mit der ersten Trägerleiste 11 oder mit der zweiten Trägerleiste 12 oder mit beiden Trägerleisten 11, 12 gekuppelt werden.

Für einen Blickschutz im lediglich unteren Scheibenbereich 80b können die zweite Trägerleiste 12 nach unten bis zu der Stellposition 123 und die erste Trägerleiste 11 nach unten bis zu der Stellposition 112 verschoben werden. Die Stellposition 112 ist etwa auf 1/3 bis 1/2 der Höhe der Fahrzeugscheibe angeordnet, so dass die Fahrzeugscheibe 80 im unteren Bereich 80b blickdicht verdeckt werden kann. Durch den oberen unverdeckten Bereich 80a der Fahrzeugscheibe 80 kann ungehindert Licht in das Fahrzeuginnere einfallen.

Für ein vollständiges Aufheben des Blickschutzes bzw. Einfahren des Verblendungskörpers 10 in dem Wohnmodus 102, können die zweite Trägerleiste 12 nach unten bis zu der Stellposition 123 und die erste Trägerleiste 11 nach unten bis zu der Stellposition 113 verschoben werden. Die Stellposition 113 ist die untere Endposition der ersten Trägerleiste 11, die Stellposition 123 die untere Endposition der zweiten Trägerleiste 12. Hierbei ist der Verblendungskörper 10 vollständig zusammengefaltet. In dem in Figur 2 gezeigten Beispiel befinden sich die unteren Endpositionen 113, 123 in einer Kassette 40 zum Verstauen des Verblendungskörpers 10.

Die Kassette 40 ist unterhalb der Fahrzeugscheibe 80 in dem Profilrahmen 50 ausgebildet und weist eine Kammer 41 mit einer Kammeröffnung 42 in Richtung der Trägerleisten 11, 12 auf. Die Kammer 41 und die Kammeröffnung 42 sind derart ausgebildet, dass zumindest die zweite Trägerleiste 12 und der Verblendungskörper 10 in der Kammer 41 versenkbar bzw. einschiebbar sind. Dazu sind die Führungseinrichtung 20 bzw. die Führungsglieder 21, 22 bis in die Kammer 41 ausgebildet. Sobald beide Trägerleisten 11, 12 in ihren jeweiligen unteren Endpositionen 113, 123 angeordnet, ist der Verblendungskörper 1 vollständig zusammengefaltet und in der Kammer 41 verstaut. Die obere erste Trägerleiste 11 kann hierbei als Verschlussdeckel der Kammer 41 bzw. der Kassette 40 dienen. Diese Position der Trägerleisten 11, 12 wird in einem Wohnmodus 102 eingestellt, bei dem das Fahrzeugscheiben-Verblendungssystem 1 für einen hohen Wohnkomfort möglichst unauffällig in die nicht dargestellte Fahrzeuginnenverkleidung integriert ist.

Die oben beschriebenen Stellpositionen 111, 112, 113, 121, 122, 123 der Trägerleisten 11, 12 sind über die Steuerelektronik 60 vorprogrammierbar, so dass bei Auswahl einer bestimmten Stellposition 111, 112, 113, 121, 122, 123 mit nur einem Drücken des Schalters 61 die jeweiligen Stellpositionen 111, 112, 113, 121, 122, 123 der Trägerleisten 11, 12 angefahren werden können. Hierzu sind zur Steuerung und Regelung an den Stellpositionen 111, 112, 113, 121, 122, 123 wiederum jeweils ein mit der Steuerelektronik 60 verschalteter Positionssensor 111a, 112a, 113a, 121a, 122a, 123a zur Erfassung der Trägerleisten 11, 12 angeordnet.

Insgesamt ergibt sich durch die Verschiebemöglichkeiten der ersten Trägerleiste 11 und der zweiten Trägerleiste 12 folglich eine Vielzahl an Einstellmöglichkeiten für eine vollständige oder bereichsweise Verdeckung der Fahrzeugscheibe. Der motorische Antrieb und das Vorprogrammieren verschiedener Stellpositionen der Trägerleisten ermöglichen eine sehr komfortable und simple Bedienung des Fahrzeug-Verblendungssystems.

## Patentansprüche

1. Fahrzeugfrontscheiben-Verblendungssystem (1) mit einem Verblendungskörper (10) zum Aufziehen vor eine Fahrzeugscheibe (80), wobei
der Verblendungskörper (10) in Längsrichtung faltbar ist und an einem ersten Endbereich (10a) eine erste Trägerleiste (11) und an einem dem ersten Endbereich (10a) gegenüberliegenden zweiten Endbereich (10b) eine zweite Trägerleiste (12) aufweist,
die erste Trägerleiste (11) und die zweite Trägerleiste (12) in einer Führungseinrichtung (20) mit zumindest einem stabförmigen Führungsglied (21, 22) verschiebbar und/oder arretierbar gelagert sind,
der Verblendungskörper (10) in vertikaler Richtung faltbar ist und
die erste Trägerleiste (11) an einem oberen Endbereich (10a) und
die zweite Trägerleiste (12) an einem unteren Endbereich (10b) des Verblendungskörpers (10) angeordnet sind,
eine Antriebsvorrichtung (30) mit zumindest einem Antriebsmotor (31, 32) zum Verschieben und/oder Arretieren der ersten Trägerleiste (11) und/oder der zweiten Trägerleiste (12) vorgesehen ist,
eine Steuerelektronik (60) zum Ansteuern der Antriebsvorrichtung (30) vorgesehen ist, über die die erste Trägerleiste (11) und/oder die zweite Trägerleiste (12) in eine definierte Stellposition (111, 112, 113, 121, 122, 123) verschiebbar ist,
**dadurch gekennzeichnet, dass**
ein Positionssensor (111a, 112a, 113a, 121a, 122a, 123a) zur Erfassung der Stellposition (111, 112, 113, 121, 122, 123) der ersten Trägerleiste (11) und/oder der zweiten Trägerleiste (12) vorgesehen ist und
die Steuerelektronik (60) eine Schnittstelle aufweist, über die die
Steuerelektronik (60) mit einer Fahrzeugelektronik ansteuerbar ist, und wobei der Positionssensor (lila. 112a, 113a, 121a, 122a, 123a) mit der Fahrzeugelektronik verschaltet ist.

2. Fahrzeugfrontscheiben-Verblendungssystem (1) nach Anspruch 1, wobei eine schaltbare Kupplung (35) vorgesehen ist, über die die Antriebsvorrichtung (30) mit der ersten Trägerleiste (11) und/oder der zweiten Trägerleiste (12) kuppelbar ist.

3. Fahrzeugfrontscheiben-Verblendungssystem (1) nach einem der Ansprüche 1 oder 2, wobei die Antriebsvorrichtung (30) fahrzeugseitig, vorzugsweise an der Führungseinrichtung (20), angeordnet ist.

4. Fahrzeugfrontscheiben-Verblendungssystem (1) nach einem der voranstehenden Ansprüche, wobei die erste Trägerleiste (11) und die zweite Trägerleiste (12) in Querrichtung jeweils mit einem Führungskopf (11a, 11b, 12a, 12b) gegenüber dem Verblendungskörper (10) hervorstehen.

5. Fahrzeugfrontscheiben-Verblendungssystem (1) nach einem der voranstehenden Ansprüche, wobei die erste Trägerleiste (11) und die zweite Trägerleiste (12) jeweils zumindest eine Öffnung (13, 14, 15, 16) aufweisen, durch die sich das Führungsglied (21, 22) erstreckt.

6. Fahrzeugfrontscheiben-Verblendungssystem (1) nach einem der voranstehenden Ansprüche, wobei das Führungsglied (21, 22) als eine Spindelwelle ausgebildet ist, mit der die erste Trägerleiste (11) und/oder die zweite Trägerleiste (12) über ein Gewinde in Eingriff stehen.

7. Fahrzeugfrontscheiben-Verblendungssystem (1) nach einem der voranstehenden Ansprüche, wobei die Führungseinrichtung (20) in einem Profilrahmen (50) angeordnet ist.

8. Fahrzeugfrontscheiben-Verblendungssystem (1) nach einem der voranstehenden Ansprüche, wobei zumindest eine Kassette (40) vorgesehen ist, in die der Verblendungskörper (10) und die erste Trägerleiste (11) und/oder die zweite Trägerleiste (12) in einer Endposition (113, 123) verstaubar sind.

9. Fahrzeugfrontscheiben-Verblendungssystem (1) nach einem der voranstehenden Ansprüche, wobei durch Betätigung eines mit der Steuerelektronik (60) verbundenen Schalters (61) das Verblendungssystem (1) zumindest in einen "Fahrt-Modus" oder in einen "Wohn-Modus" schaltbar ist, und
- in dem "Fahrt-Modus" (101)
- die erste Trägerleiste (11) und die zweite Trägerleiste (12) jeweils in eine obere Endposition (111, 121) verschiebbar sind, so dass der Verblendungskörper (10) oberhalb der Fahrzeugscheibe (80) zusammengefaltet ist,
- für einen "Sonnenblendschutz" die erste Trägerleiste (11) in die obere Endposition (111) und die zweite Trägerleiste (12) in eine obere Zwischenposition (122) verschiebbar sind, so dass der Verblendungskörper (10) in einem oberen Bereich (80a) der Fahrzeugscheibe (80) vor etwa 1/3 der Fahrzeugscheibe (80) entfaltet ist,
- in dem "Wohn-Modus" (102)
- die erste Trägerleiste (11) und die zweite Trägerleiste (12) jeweils in eine untere Endposition (113, 123) verschiebbar sind, so dass der Verblendungskörper (10) unterhalb der Fahrzeugscheibe (80) zusammengefaltet ist,
- für einen "Teil-Blickschutz" die erste Trägerleiste (11) in eine untere Zwischenposition (112) und die zweite Trägerleiste (12) in die untere Endposition (123) verschiebbar sind, so dass der Verblendungskörper (10) in einem unteren Bereich (80b) der Fahrzeugscheibe (80) vor etwa 1/3 der Fahrzeugscheibe (80) entfaltet ist, und
- für einen "Voll-Blickschutz" die erste Trägerleiste (11) in die obere Endposition (111) und die zweite Trägerleiste (12) in die untere Endposition (123) verschiebbar sind, so dass der Verblendungskörper (10) vor die gesamte Fahrzeugscheibe (80) entfaltet ist.

## Claims

1. Vehicle windshield blind system (1) comprising a blind body (10) for being pulled in front of a vehicle window (80), wherein
the blind body (10) is foldable in the longitudinal direction and has a first carrier strip (11) at a first end portion (10a) and a second carrier strip (12) at a second end region (10b) opposite the first end region (10a),
the first carrier strip (11) and the second carrier strip (12) are supported in a guide device (20) in a displaceable and lockable manner with at least one rod-shaped guide member (21, 22),
the blind body (10) is foldable in the vertical direction and the first carrier strip (11) is arranged at an upper end portion (10a) and the second carrier strip (12) is arranged at a lower end portion (10b) of the blind body (10),
a drive device (30) is provided which has at least one drive motor (31, 32) for moving and/or locking the first carrier strip (11) and/or the second carrier strip (12),
control electronics (60) are provided for controlling the drive device (30), via which the first carrier strip (11) and/or the second carrier strip (12) can be displaced to a defined set position (111, 112, 113, 121, 122, 123),
**characterized in that**
a position sensor (111a, 112a, 113a, 121a, 122a, 123a) is provided for detecting the parking position (111, 112, 113, 121, 122, 123) of the first carrier strip (11) and/or the second carrier strip (12), and
the control electronics (60) have an interface via which the control electronics (60) can be controlled by vehicle electronics, and
wherein the position sensor (111a, 112a, 113a, 121a, 122a, 123a) is interconnected with the vehicle electronics.

2. Vehicle windshield blind system (1) of claim 1, wherein a switchable coupling (35) is provided, via which the drive device (30) can be coupled with the first carrier strip (11) and/or the second carrier strip (12).

3. Vehicle windshield blind system (1) of one of claims 1 or 2, wherein the drive device (30) is arranged on the vehicle side, preferably at the guide means (20).

4. Vehicle windshield blind system (1) of one of the preceding claims, wherein the first carrier strip (11) and the second carrier strip (12) each protrude in the transverse direction with a guide head (11a, 11b, 12a, 12b) with respect to the blind body (10).

5. Vehicle windshield blind system (1) of one of the preceding claims, wherein the first carrier strip (11) and the second carrier strip (12) each have at least one opening (13, 14, 15, 16) through which the guide member (21, 22) extends.

6. Vehicle windshield blind system (1) of one of the preceding claims, wherein the guide member (21, 22) is configured as a spindle shaft with which the first carrier strip (11) and/or the second carrier strip (12) are engaged via a thread.

7. Vehicle windshield blind system (1) of one of the preceding claims, wherein the guide device (20) is arranged in a profile frame (50).

8. Vehicle windshield blind system (1) of one of the preceding claims, wherein at least one cassette (40) is provided into which the blind body (10) and the first carrier strip (11) and/or the second carrier strip (12) can be stowed in an end position (113, 123).

9. Vehicle windshield blind system (1) of one of the preceding claims, wherein by actuating a switch (61) connected to the control electronics (60), the blind system (1) can be switched at least to a "drive mode" or a "living mode", and
- in the "drive mode" (101)
- the first carrier strip (11) and the second carrier strip (12) can each be displaced into an upper end position (111, 121), so that the blind body (10) is folded above the vehicle window (80),
- for a "sun visor", the first carrier strip (11) can be displaced to the upper end position (111) and the second carrier strip (12) can be displaced to an upper intermediate position (122) so that the blind body (10) is deployed in an upper region (80a) of the vehicle window (80) in front of about 1/3 of the vehicle window (80),
- in the "living mode" (102)
- the first carrier strip (11) and the second carrier strip (12) are each displaceable to a lower end position (113, 123) so that the blind body (10) is folded below the vehicle window (80),
- for "partial view protection", the first carrier bar (11) is displaceable to a lower intermediate position (112) and the second carrier bar (12) is displaceable to the lower end position (123) so that the blind body (10) is deployed in a lower portion (80b) of the vehicle window (80) in front of about 1/3 of the vehicle window (80), and
- for "full view protection", the first carrier strip (11) is displaceable to the upper end position (111) and the second support bar (12) is displaceable to the lower end position (123) so that the blind body (10) is deployed in front of the entire vehicle window (80).

## Revendications

1. Système de stores (1) pour pare-brise de véhicule comprenant
un corps de store (10) à monter devant une fenêtre de véhicule (80),
le corps de store (10) étant pliable dans le sens longitudinal et comprenant à une première partie d'extrémité (10a) une première barre de support (11) et une deuxième barre de support (12) à la première région d'extrémité (10a) opposée à la deuxième région d'extrémité (10b),
la première barre de support (11) et la deuxième barre de support (12) sont montées déplaçable et/ou verrouillable dans un dispositif de guidage (20) avec au moins un élément de guidage en forme de tige (21, 22),
le corps de store (10) étant pliable dans la direction verticale et la première barre de support (11) étant disposée au niveau d'une partie d'extrémité supérieure (10a) et la deuxième barre de support (12) étant disposée au niveau d'une partie d'extrémité inférieure (10b) du corps de store (10),
un dispositif d'entrainement (30) avec au moins un moteur d'entrainement (31, 32) étant prévu pour déplacer et/ou verrouiller la première barre de support (11) et/ou la deuxième barre de support (12),
une unité de commande électronique (60) étant prévue pour commander le dispositif d'entrainement (30), par laquelle la première barre de support (11) et/ou la deuxième barre de support (12) sont déplaçables dans une a position de réglage (111, 112, 113, 121, 122, 123) définie,
**caractérisé en ce qu'**
un capteur de position (111a, 112a, 113a, 121a, 122a, 123a) est prévu pour détecter la position de réglage (111, 112, 113, 121, 122, 123) de la première barre de support (11)) et/ou la deuxième barre de support (12) et
l'unité électronique de commande (60) présente une interface par laquelle l'unité électronique de commande (60) peut être commandée par une unité électronique du véhicule,
et dans lequel le capteur de position (111a, 112a, 113a, 121a, 122a, 123a) est interconnecté avec l'unité électronique du véhicule.

2. Système de stores (1) pour pare-brise de véhicule selon la revendication 1, dans lequel est prévu un couplage commutable (35) par lequel le dispositif d'entrainement (30) peut être couplé avec la première barre de support (11) et/ou la deuxième barre de support (12).

3. Système de stores (1) pour pare-brise de véhicule selon l'une des revendications 1 ou 2, dans lequel le dispositif d'entrainement (30) est disposé côté véhicule, de préférence au moyen de guidage (20).

4. Système de stores (1) pour pare-brise de véhicule selon l'une quelconque des revendications précédentes, dans lequel la première barre de support (11) et la seconde barre de support (12) font saillie dans le sens transversal avec une tête de guidage (11a, 11b, 12a, 12b) par rapport au corps de store (10).

5. Système de stores (1) pour pare-brise de véhicule selon l'une quelconque des revendications précédentes, dans lequel la première barre de support (11) et la deuxième barre de support (12) présentent chacune au moins une ouverture (13, 14, 15, 16) à travers laquelle passe l'élément de guidage (21, 22).

6. Système de stores (1) pour pare-brise de véhicule selon l'une quelconque des revendications précédentes, dans lequel l'élément de guidage (21, 22) est conçu comme un arbre de broche, avec lequel la première barre de support (11) et/ou la deuxième barre de support (12) sont engagées par un filetage.

7. Système de stores (1) pour pare-brise de véhicule selon l'une quelconque des revendications précédentes, dans lequel le dispositif de guidage (20) est disposé dans un cadre de profilé (50).

8. Système de stores (1) pour pare-brise de véhicule selon l'une quelconque des revendications précédentes, dans lequel au moins une cassette (40) est prévue dans laquelle le corps de store (10) et la première barre de support (11) et/ou la deuxième barre de support (12) peuvent être logées dans une position extrême (113, 123).

9. Système de stores (1) pour pare-brise de véhicule selon l'une des revendications 6 ou 7, le système de stores (1) pouvant être actionné par un commutateur (61) connecté à l'unité électronique de commande (60) au moins dans un "mode de conduite" ou en "mode de séjour", et
- dans le "mode de conduite" (101)
- la première barre de support (11) et la deuxième barre de support (12) sont chacune déplaçable dans une position extrême supérieure (111, 121), de sorte que le corps store (10) est plié au-dessus du vitre du véhicule (80),
- pour un "pare-soleil", la première barre de support (11) est déplaçable dans la position extrême supérieure (111) et la deuxième barre de support (12) est déplaçable dans une position intermédiaire supérieure (122), de sorte que le corps de store (10) est déployé dans une région supérieure (80a) de la vitre du véhicule (80) devant environ 1/3 de la vitre du véhicule (80),
- dans le "mode de séjour" (102)
- la première barre de support (11) et la deuxième barre de support (12) sont chacune déplaçable dans une position finale basse (113, 123), de sorte que le corps de store (10) est plié au-dessous de la vitre du véhicule (80),
- pour une "pare-vue partielle", la première barre de support (11) est déplaçable dans une position intermédiaire inférieure (112) et la deuxième barre de support (12) est déplaçable dans la position extrême inférieure (123), de sorte que le corps de store (10) soit déployé dans une partie inférieure (80b) de la vitre du véhicule (80) devant environ 1/3 de la fenêtre du véhicule (80), et
- pour une "pare-vue complète", la première barre de support (11) est déplaçable dans la position finale supérieure (111) et la deuxième barre de support (12) est déplaçable dans la position finale inférieure (123), de sorte que le corps de store (10) soit déployé devant la vitre du véhicule tout entier (80).
